Europäisches Patentamt

European Patent Office

Office européen des brevets

(19)

(11) Publication number: **0 037 122**
A1

(12) # EUROPEAN PATENT APPLICATION

(21) Application number: 81102430.6

(22) Date of filing: 31.03.81

(51) Int. Cl.³: **H 01 M 2/02**
**H 01 M 2/04**

(30) Priority: 01.04.80 JP 42141/80
01.04.80 JP 42142/80

(43) Date of publication of application:
07.10.81 Bulletin 81/40

(84) Designated Contracting States:
BE DE FR GB

(71) Applicant: Hitachi Maxell Ltd.
No 1-1-88, Ushitora Ibaraki-shi
Osaka-fu(JP)

(72) Inventor: Koide, Koji
2-3, Miyano-cho Takatsuki
Osaka(JP)

(72) Inventor: Iwamaru, Tugiyasu
8-11-207, Showaen Settsu
Osaka(JP)

(72) Inventor: Urade, Makoto
1-4, Aobaokaminami Suita
Osaka(JP)

(74) Representative: von Kreisler, Alek et al,
Deichmannhaus am Hauptbahnhof
D-5000 Köln 1(DE)

(54) A cylindrical battery.

(57) A battery comprising a cylindrical container (1) in which cell elements are enclosed in a known manner, said container having an intermediate portion (5) for accommodation of the cell elements and a sealing mouth portion (4) closed by a gasket member, the mouth portion of the container having a diameter smaller by at least a wall thickness of the intermediate portion of the container than a diameter of the intermediate portion of the container so as to assure sealing of the mouth portion for a leak proof of the electrolyte of the battery from the mouth portion.

EP 0 037 122 A1

./...

*Fig.1*

A CYLINDRICAL BATTERY

The present invention relates to a battery and more particularly to a cylindrical battery having means for preventing leakage of an electrolyte form the mouth portion of a container of the battery.

Generally, in a dry battery in a case where the battery is used long time, the inside pressure of the cell becomes high due to discharge, thereby causing the mouth portion of the cell to be slightly deformed resulting in reduction of the sealing pressure at the mouth portion in which a gasket member is provided for sealing the mouth portion. The reduction of the sealing pressure results in undesirable leakage of a electrolyte from the cell.

Such leakage of the electrolyte is remarkable particularly in the alkaline cell in which aqueous alkaline solution is used.

One conventional method of improving the drawbacks of the leakage of the solution in the alkaline cell is as follows;

a sealing member made of plastic resin is inserted in a mouth portion of the can of container of the cell having a diameter larger than the diameter of the intermediate portion of the can for accommodation of the cell elements.

Pressing the outside of the mouth portion corresponding to the cylindrical side face of the sealing member inwardly to press the sealing member making the diameter of the pressed portion generally equal to the diameter of the intermediate portion of the can.

The top end portion of the can situated above the gasket is curved inwardly for retaining the sealing force of the mouth portion.

Since a desired high sealing force can not be obtained by the conventional method as described above, a nylon 11 or nylon 66 is used for the gasket member which serves to prevent the occurence of cold flow.

Another method of improving the sealing pressure is to provide a metal washer inside the sealing mouth portion particularly, inside the gasket member to increase the sealing pressure between the can and the washer.

The latter methods, however, can not improve the sealing characteristics at the mouth portion than expected, because of such a reason that a possible amount of gas genereted in the can due to long time use is accumulated in the can under an undesirable high pressure due to the strong sealing of the gasket. The pressure is transferred to the annular washer and / or the gasket strongly sealed, so that the high pressure thus accumulated deforms the mouth portion of the can decreasing the sealing pressure, then allowing leakage of the gas.

In order to improve the conventional battery and to eliminate the drawbacks of the problem of leakage of the gas and liquid in the battery the present inventors made various experiments as mentioned hereinafter.

EXAMPLES OF EXPERIMENT

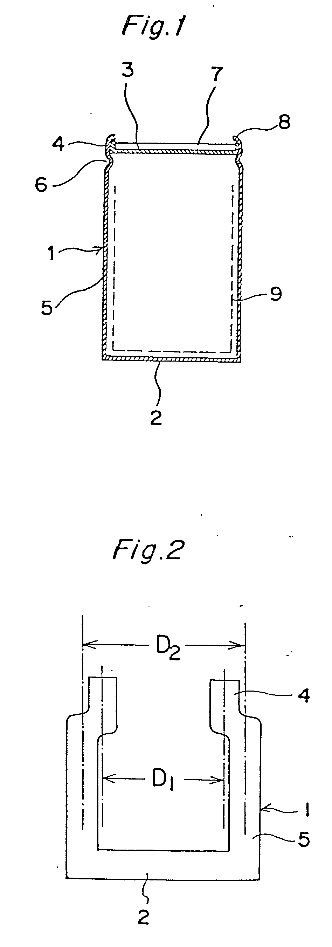

Five groups of cans or containers with different diameter by every group are provided. Each of the groups consists of one hundred cans each having such a configutation as shown in Fig. 1 and Fig. 2 in which a generally cylindrical can 1 has the bottom 2 closed with the top opening 3 surounded by a short annular mouth portion 4 having a diameter D1. The mouth portion is connected with the intermediate portion 5 having a diameter D2 through an inwardly curved portion 6. The top opening 3 is sealed by a disc 7 mounted on the curved portion 6 with the top face of the disc 7 closed by the uppermost portion 8 bent inwardly.

The washers for closing the mouth portion are made of steel disc with a diameter of 29.6 mm and a thickness of 1 mm. The gasket member is in the form of a petri dish made of nylon 66 with an inner diameter equal to the washer diameter and a thickness of the annular wall surrounding the wahser is 2 mm.

Each of the cans has a total height of about 50 mm with a height of the mouth portion 3 mm and the intermediate portion for accommodation of the cell elements about 47 mm.

Each of cans was made of steel with the inside and the outside coated with a nickel.

Each of the cans before pressed has a diameter 31.6 mm for receiving the sealing member consisting of a gasket and a washer fitted inside the annular wall of the gasket.

Inside diameter of each group of the cans is defined as shown in the table 1.

TABLE 1

| No. of groups | inner diameter (mm) of the intermediate portion of the can |
|---|---|
| 1 | 31.40 |
| 2 | 31.30 |
| 3 | 31.26 |
| 4 | 31.20 |
| 5 | 31.00 |

The thickness of each of the cans is 0.3 mm and the capacity is 35.3 cc.

A cup 9 made of vinyl non woven paper with the bottom closed is accomodated in each of the cans. A mixture of 7 % amalgamated Zinc powder of 15 g having an avarage grain diameter of 300 μm and iron powder 5 mg having an avarage diameter of 300 μm with 25 g KOH solution 35 % by weight are accommodated in the cup, and in turn the sealing member formed by the gasket with the washer fitted is inserted in the top opening of the can for sealing.

In order to avoid the unstable factors which may be caused by the rough surface of the gasket, washer and can, asphalt compound comprising a mixture of blown asphalt with process oil is coated on the respective contacting surfaces of the elements so as to serve as a liquid sealing.

Subsequently, the mouth portion is pressed for sealing in such a manner that the thickness of the peripheral portion of the gasket is decreased up to 0.7 mm i.e., the inner diameter of the mouth portion of the can is decreased up to 31.00 mm in turn the top edge portion of the can is curved by 0.8 mm.

All the cans each thus containing the mixture with the top portion sealed by the gasket are left under an atomosphere of 45°C with 90 % RH.

The result of examination of the number of cans which the liquid leakage occurred is shown in the table 2.

TABLE 2

| No. of groups | periods during which the can were left (days) | | |
|---|---|---|---|
| | 15 | 30 | 60 |
| 1 | 0 | 0 | 7 |
| 2 | 0 | 0 | 8 |
| 3 | 0 | 21 | 47 |
| 4 | 2 | 19 | 58 |
| 5 | 3 | 23 | 60 |

The examination was perfomed by dropping a solution of Cresol-Red in water / alchol on the contact portion between the gasket member and the can.

From the result of the examination it can be easily understood that after the cans were left more than 60 days, the number of cans which liquid leakage occurred was smallest in a case where the inner diameter of mouth portion of the can was smaller by more than 0.3 mm than the diameter of the intermediate portion of the can.

It was also noticed that the wall thickness of the mouth portion as measured by cutting the can into two fractions along the longitudinal axis was 0.3 mm without being reduced from the initial wall thickness before the can was subjected to the pressing process.

According to the result of the experiments, it is supposed that when the inner diameter of the mouth portion of the can is smaller more than the wall thickness of the intermediate portion of the can than the diameter of the intermediate portion of the can i.e., the diameter D1 of a circle defined by the center line of the wall thickness of the mouth portion of the can is smaller than the diameter D2 of a circle defined by the center line of the wall thickness of the intermediate portion of the can, the sealing mouth portion is prevented from deformation in spite of the high inner pressure and high sealing force in the mouth portion, resulting in suppression of the liquid leakage from the mouth portion.

The present inventors made further experiments on alminum cans having a diameter of 50 mm with the wall thickness of 0.5 mm as well as brass cans having a diameter of 13.2 mm with a wall thickness of 0.2 mm in a similar manner as described above. In the examples, as to the cans having mouth diameters of 49.5 mm and 13 mm, only a few percents of total amount of cans provided for the experiments showed liquid leakage.

Although the reason why the reduction of the diameter of the mouth portion of the can than that of the intermediate portion more than the wall thickness of the intermediate portion of the can is effective to increase the sealing pressure of the mouth portion of the can is not obvious, it is supposed that tensile stress acting on the mouth portion caused by the force occurring when the sealing member is engaged in the mouth portion contributes to prevent from deformation of the mouth portion so that the liquid leakage from the mouth portion can be effectively prevented.

Accordingly, an essential object of the present invention is to provide a battry being capable of preventing the liquid leakage from the mouth portion of the can independent of the period of time during which it is used.

These and other objects and specific features of the present invention of a batterty will be fully described in conjunction with an embodiment of a battery with reference to the attached drawings.

Fig. 1 is a cross sectional view showing a container used for a experiment to examine the leak proof effect of sealing of the mouth portion of the container,

Fig. 2 is a cross sectional view showing a relationship between the diamemter of an intermediate portion of the container and a diameter of a mouth portion therof used in the present invention,

Fig. 3 is a semi cross sectional view showing a battery according to the present invention,

Fig. 4 is an enlarged partial cross sectional view showing an essetial portion of a battery shown in Fig. 3, and

Figs. 5 through 7 are respectively semi cross sectional view showing a precess of making a battery according to the present invention with the top and bottom therof reversed from the batterty shown in Fig. 3.

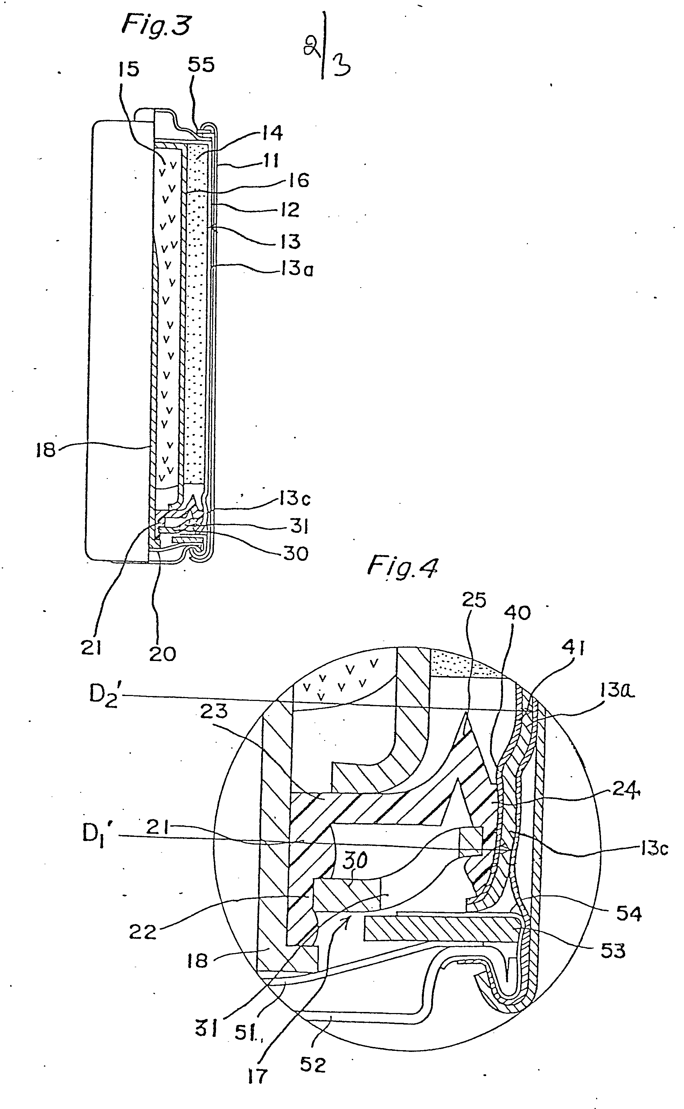

Referring to Figs. 3 and 4, there are shown generally cylindrical outer case 11 made of a steel plate, a synthetic resin tube 12 and a positive can or container 13 made of a steel having 0.3 mm thickness coated with nickel layers (not shown). Each of the layers 11, 12 and 13 is coaxially laminated so as to provide a cylindrical cell container for accomodation of cell elements in a known manner. Said cell elements comprise a positive active material 14 composed mainly of manganese dioxide and a paste like negative electrode material 15 composed of amalgamated Zinc powder, an alkaline electrolyte and carboxylmethyl cellulose, the latter element 15 is coaxially disposed inside the positive active material layer 14 separated by a separator 16 made of vinylon / rayon paper.

Said positive can 13 is composed of a cylindrical intermediate portion 13a for accommodation of the cell elements with the top portion enclosed by a top plate 13b and a mouth portion 13c the bottom end of which is open to receive a gasket member 20 for sealing the opening 17 of the mouth portion 13c. The intermediate portion 13a of the positive can 13 has an outer  diameter D1' of 13.2 mm and the outer diameter   of the gasket member 20 is 12.5 mm.

The said gasket member 20 comprises an annular thick wall portion 21 around a center through hole 22 engaged with the negative collector 18, a bottom wall 23 and an outer peripheral wall 24 projected generally perpendicular to the bottom wall 23 through a V shaped portion 25.  Said peripheral wall portion 24 has a thickness of 0.7 mm with the outer surface fitted with the inner surface of the mouth portion 13c.

An annular washer 30 having an air passage 32 with an outer diameter of 11.05 mm is inserted between the thick wall portion 21 and the peripheral wall 24.

The gasket 20 is supported by an annular shoulder 40 curved radially inwardly near the mouth portion 13c of the positive can 13 so that the gasket member 30 is prevented from being shifted in a direction of intermediate portion 13a.  The mouth portion 13c of the positive can 13 is deformed inwardly so as to clamp the peripheral wall 24 of the gasket 30 to define an outer diameter D1' 12.88 mm of the mouth portion of the positive can 13 with a liquid like sealing material 41 consisting of an asphalt compound situated therebetween so that the  outer peripheral portion of the gasket is clamped by the positive can 13 through the sealing material 41 to seal the opening 17 of the positive can 13. Since the mouth portion 13c is clamped as mentioned above, the diameter D1' of the mourh portion 13c is smaller by 0.32 mm than that D2' of the intermediate portion 13a of the positive can 13. The decreased ratio of the gasket 30 is 12.10 %.

A spring plate 51 serves to bias the negative collector 18 in a direction of intermediated portion with the peripheral end portion inserted between the negative terminal plate 52 and a paper ring 53 which is supported on the bottom end of the negative can 13 through a resin member 54. These elements 51 through 54 are arranged in a known manner.

A process of making an alkaline battery as mentioned above is hereinafter described.

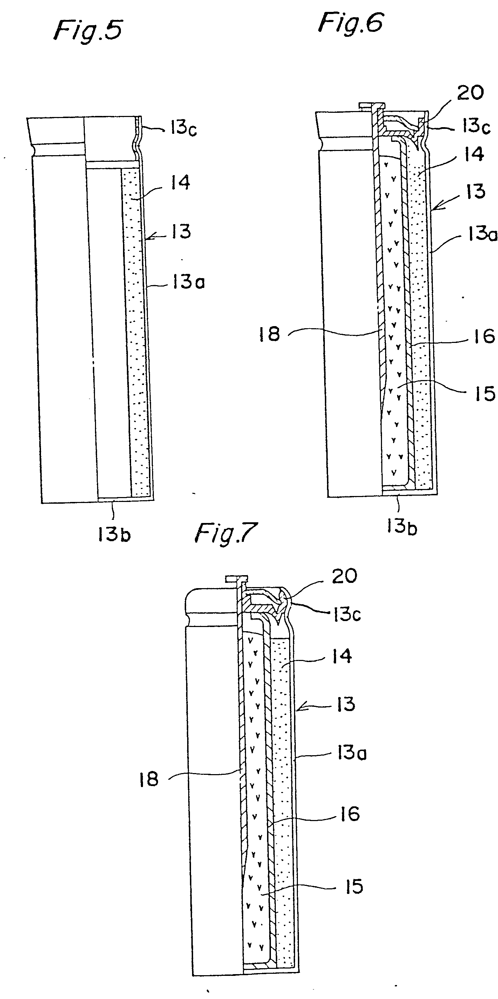

As shown in Fig. 5, the positive active martial 14 is filled in the positive can 13, in turn the bent portion 40 is formed inwardly near the mouth portion with the mouth portion 13c slighty expanded outwardly so as to facilitate insertion of the gasket 30. Then the liquid sealing material 41 made of asphalt compound is coated on the inner surface of the mouth portion 13c so as to prevent the electrolyte creeping. After the separator 16, negative electode material 15 and the electrolyte are filled in the inner space defined by the positive active material 14 as shown in Fig. 6, the gasket 20 on which the negative collector 18 and the washer are attached is engaged in the opening of the mouth portion 13c to cover the cell elements.

Subsequently, the mouth portion 13c i.e., the top end portion of the positive can 13 beyond the annular shoulder 40 is pressed radially inwardly to clamp the gasket 20 so

that the diameter D1' of the mouth portion 13c becomes 0.32 mm smaller than the diameter D2' of the intermediate portion 13a, thereby causing the peripheral wall 24 to be sticked onto the inner surface of the mouth portion 13c of the positive can 13 resulting in sealing of the opening of the positive can 13. Subsequently, the resin member 54, paper ring 53, spring plate 51 and negative terminal plate 52 are mounted on the negative electrode side with the resin ring 55 attached on the positive electrode side in a known manner.

Finally, the positive can 13 is inserted within the outer case 11 then the alkaline bettery A according to the present invention is completed.

For comparison, a cell B was produced in nearly the same manner as aforedescribed excepting the procedures that the mouth portion of 12.88 mm can was once enlarged in its outer diameter, set with a gasket similar to the above, and the assembly was clamped to the same size as the outer diameter of the intermediate portion. Also, a cell C was produced in the same manner as aforedescribed, excepting that a positive can having an outer diameter of 13.13 mm was used with its opening enlarged, it was accommodated with a gasket similar to the above, and was clamped to make its outer diameter 12.88 mm, or smaller by 0.25 mm than the outer diameter (13.13 mm) of the intermediate portion. The rate of decrease in thickness of the gasket was 12.1 % in both Cell B and Cell C.

100 pieces each of these cell A, B and C were preserved in an atmosphere of 60°C and 90 % R.H. for a prescribed duration, after which the number of cells which showed leakage was checked. The results are shown in Table 3.

| TABLE 3 | Presevation period | |
|---|---|---|
| | 1 month | 3 months |
| Cell A | 0 | 1 |
| Cell B | 5 | 23 |
| Cell C | 16 | 48 |

As shown in Table 3, the cell A according to the present invention has excellent leak-proof in comparison with other cells B and C.

In the present invention, various kinds of liquid sealing materials may be used, e.g., asphalt compound comprising a mixture of blown asphalt with process oil, aliphatic polyamide, fluorine oil, etc. With regard to the method of laying the liquid packing material 16 on the interface between the gasket 20 and the positive can 13, there may be employed, in addition to the method of applying to the inside surface of the opening of the positive can, a method of applying to the outer circumferential surface of the gasket 20, of a method of applying to both the inside surface of the opening of the positive can 13 and the outer circumferential surface of the gasket 20.

Through more detailed study by the present inventors it has been known that the thickness of the gasket 20 on the portion to be clamped between the inner wall of the positive can 13 and the washer 30 is preferably in the range of 0.4 to 1.2 mm under a non-compressed condition, thereby improving leak-proof property to the battery.

Also, in the cylindrical alkaline battery of the present invention, the mouth protion 13c of the positive can 13 has a diameter smaller than the intermediate portion 13a. Concurrently, the gasket 20 also has a samller outer diameter, so that the opening of the positive can 13 need not be largely expanded in a trumpet form in inserting the gasket 20. In other words, the gasket 20 can be inserted on slight expansion of the opening. This is presumed to suppress the trend for the mouth portion 13c of the positive can to become fragile owing to the enlargement in diameter, and contribute to an improvement in leak-proof property of the battery. Also, because the outer diameter of the mouth portion 13c of the positive can 13 is made smaller than that of the intermediate portion 13a, the peripheral portions of the paper ring 53 and the negative terminal plate 52 can be bent inwardly with much ease. As a result, corrections of irregularities in the final total size of parts such as a paper ring 53, spring plate 51 negative terminal plate 52, etc. as well as the errors in the diameter of the casing can are facilitated, thus giving rise to smaller occurrence of defects of irregularities in overall height of the cell. Also, in covering with a resin tube 12, insertion of positive can 13 in resin tube 12 is facilitated.

What is claimed is:

1.   A battery comprising a cylindrical container having an intermediate portion and a mouth portion with the bottom end closed and top end open, a cell elements accommodated in the intermediated portion of the container, an annular gasket member enclosed in the mouth portion to seal the opening of the mouth portion in such a manner that the side face of the gasket member is tightend by the inner face of the mouth portion, the top end portion of the mouth portion being curved radially inwardly to close the outer peripheral edge of the gasket member, wherein the inprovement comprises the mouth portion of the container which is formed in such a manner that the diameter of a circle defined by the center of the wall thickness of the mouth portion is smaller at least by a wall thickness of the intermediate portion of the container than the diameter of a circle dicined by the center of the wall thickness of the intermediate portion of the can.

2.   A battery according to Claim 1, wherein said gasket member has a central bore and inner and outer axial projections protruding respectively from the inner and outer peripheral edge therof, being engaged within the mouth portion with a washer member fitted in the space defined said projections of the gasket member, said central bore being engaged with a negative electrode collector, said gasket member being tightened between the outer peripheral sufgace of the washer member and the inside face of the mouth portion of the container, said cell elements containing an alkaline liquid as an electrolyte.

3. A battery according to Claim 1, wherein said container further comprises an annular shoulder portion projected inwardly of the container so as to serve to support the gasket member.

4. A battery according to Claim 1, wherein said gasket member is made of nylon.

*Fig.1*

*Fig.2*

Fig.3

Fig.4

0037122

**Fig.5**

**Fig.6**

**Fig.7**

0037122

European Patent Office

# EUROPEAN SEARCH REPORT

Application number

EP 81102430.6

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | <u>GB - A - 1 540 710</u> (COMPAGNIE) <br> + Fig. 1 + <br> -- <br> <u>US - A - 3 971 673</u> (COUEILLE) <br> + Fig. 1 + <br> -- <br> <u>US - A - 4 136 443</u> (NABIULLIN) <br> + Abstract; fig. 2,3,6,7 + <br> ---- | 1 <br><br><br> 1 <br><br><br> 1 | H 01 M 2/02 <br> H 01 M 2/04 |
| | | | TECHNICAL FIELDS SEARCHED (Int. Cl.³) <br><br> H 01 M 2/00 |
| | | | CATEGORY OF CITED DOCUMENTS <br><br> X: particularly relevant <br> A: technological background <br> O: non-written disclosure <br> P: intermediate document <br> T: theory or principle underlying the invention <br> E: conflicting application <br> D: document cited in the application <br> L: citation for other reasons <br><br> &: member of the same patent family, corresponding document |
| X | The present search report has been drawn up for all claims | | |
| Place of search <br> VIENNA | Date of completion of the search <br> 29-06-1981 | Examiner <br> LUX | |

EPO Form 1503.1   06.78